# EUROPEAN PATENT APPLICATION

(11) **EP 2 830 270 A1**
(43) Date of publication of application: **28.01.2015**
(21) Application number: 14177898.5
(22) Date of filing: 21.07.2014
(51) Int. Cl.: H04L 12/931

(54) **Network interface card with virtual switch and traffic flow policy enforcement**

(30) Priority: 25.07.2013 US 201313951334
(71) Applicant: Cavium, Inc., San Jose CA 95131 (US)
(72) Inventor: Hussain, Muhammad Raghib, Saratoga, CA 95070 (US); Murgai, Vishal, Cupertino, CA 95014 (US); Masood, Faisal, San Jose, CA 95131 (US)
(74) Representative: Schmidbauer, Andreas Konrad

(57) **Abstract**

A system includes a host computer executing virtual machines under the control of a hypervisor. A network interface card is coupled to the host machine. The network interface card implements a virtual switch with virtual ports. Each (one or more) virtual port is associated with a virtual machine. The network interface card may operate as a co-processor for the host computer by managing selected traffic flow policies, such as QoS and bandwidth provisioning on a per virtual machine basis.

## Description

### CROSS REFERENCE TO RELATED APPLICATIONS

This application claims priority to U.S. patent application no. 13/951,334 filed July 25, 2013, the contents of which are incorporated herein.

### FIELD OF THE INVENTION

This invention relates generally to communications in computer networks. More particularly, this invention is directed toward a network interface card with a virtual switch and traffic flow policy enforcement.

### BACKGROUND OF THE INVENTION

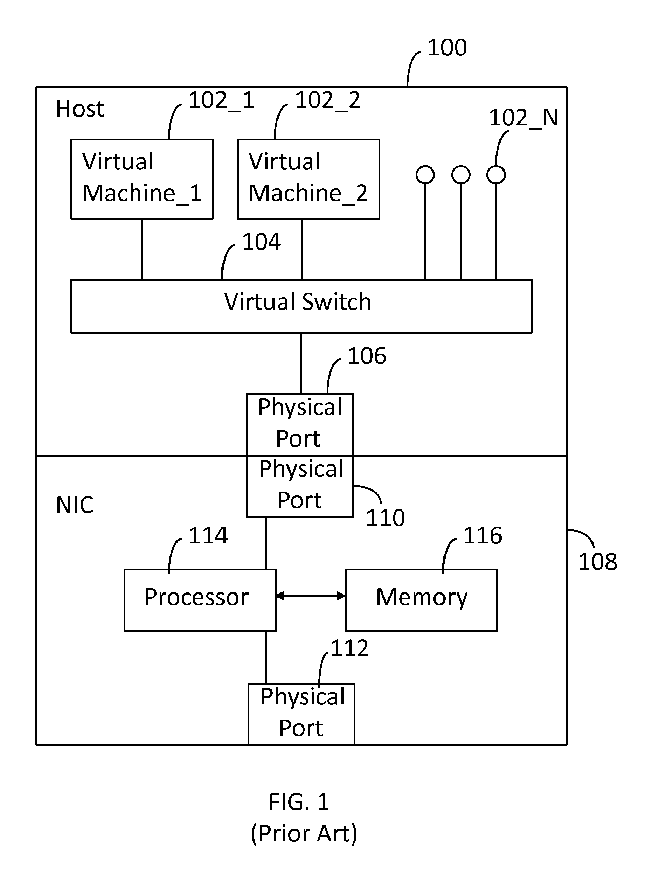

Figure 1 illustrates a physical host computer 100 executing a plurality of virtual machines 102_1 through 102_N. A virtual machine is a software implementation of a computing resource and its associated operating system. The host machine is the actual physical machine on which virtualization takes place. Virtual machines are sometimes referred to as guest machines. The software that creates the environment for virtual machines on the host hardware is called a hypervisor. The virtual view of the network interface of a virtual machine is called a virtual network interface card with ports vNIC 103_1 through 103_N. A virtual switch 104 implemented in the software of a hypervisor is used to direct traffic from a physical port 106 to a designated virtual machine's vNIC 103 or between two virtual machines.

A Network Interface Card (NIC) 108 is coupled to the host computer 100 via a physical port 110 (typically a system bus, such as Peripheral Component Interface Express (PCIe)). The NIC 108 has a physical port 112 to interface to a network. Network traffic is processed by a processor 114, which accesses instructions in memory 116. In particular, the processor 114 implements various packet formatting, check and transferring operations.

The prior art system of Figure 1 is susceptible to processing inefficiencies in the event that a virtual machine is subject to attack (e.g., a distributed denial of service attack). In such an event, the hypervisor consumes a disproportionate number of processing cycles managing the attacked virtual machine's traffic, which degrades the performance of the other virtual machines. Processing inefficiencies also stem from the large number of tasks in a virtual switch supported by the host computer, especially Quality of Service (QoS) and bandwidth provisioning between virtual machines. An additional impact of such overhead is manifested in terms of latencies added in the network communication.

In view of the foregoing, it would be desirable to provide an improved host computer and network interface card.

### SUMMARY OF THE INVENTION

A system includes a host computer executing virtual machines under the control of a hypervisor. A network interface card is coupled to the host machine. The network interface card implements a virtual switch with virtual ports. Each (one or more) virtual port is associated with a virtual machine. The network interface card may operate as a co-processor for the host managing selected traffic flow policies, such as QoS and bandwidth provisioning on a per virtual machine basis.

### BRIEF DESCRIPTION OF THE FIGURES

The invention is more fully appreciated in connection with the following detailed description taken in conjunction with the accompanying drawings, in which:
FIGURE 1 illustrates a prior art computer host and network interface card system.
FIGURE 2 illustrates a system configured in accordance with an embodiment of the invention.
FIGURE 3 illustrates a network interface card configured in accordance with an embodiment of the invention.
FIGURE 4 illustrates incoming network traffic flow processing utilized in accordance with an embodiment of the invention.
FIGURE 5 illustrates outgoing network traffic flow processing utilized in accordance with an embodiment of the invention.
FIGURE 6 illustrates traffic flow policy enforcement operations performed in accordance with an embodiment of the invention.

Like reference numerals refer to corresponding parts throughout the several views of the drawings.

### DETAILED DESCRIPTION OF THE INVENTION

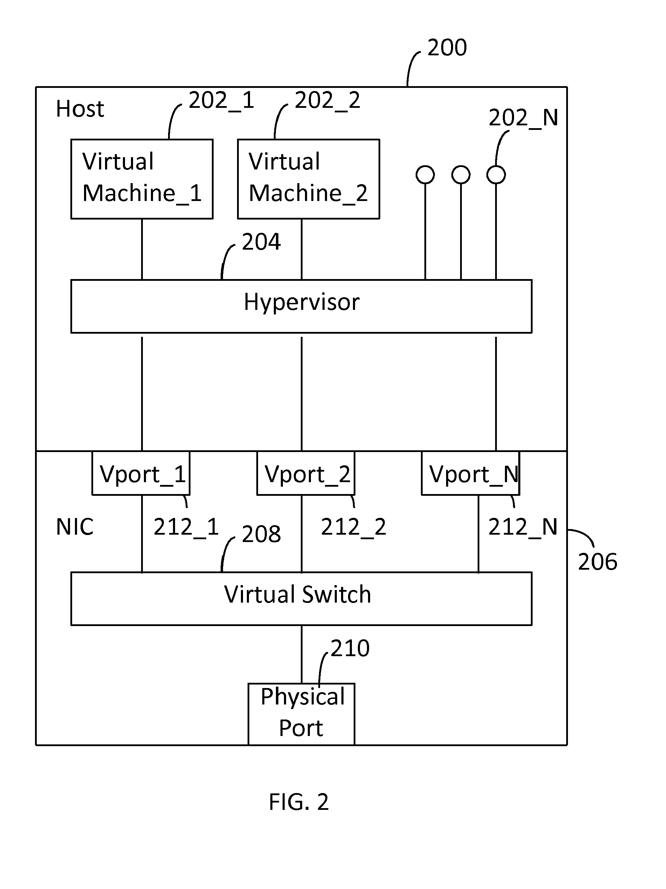

Figure 2 illustrates a system configured in accordance with an embodiment of the invention. The system includes a host machine 200 executing a set of virtual machines 202_1 through 202_N under the control of a hypervisor 204.

A network interface card 206 is coupled to the host machine 200. The network interface card 206 implements a virtual switch 208. The virtual switch 208 receives network traffic from a physical port 210 and directs it to a designated virtual machine, which is accessed through a corresponding virtual port 212. That is, each virtual port or virtual network card 212 has a corresponding virtual machine. The virtual switch 208 directs traffic to a virtual port (e.g., 212_2), which results in the corresponding virtual machine (e.g., 202_2) receiving the traffic.

The virtual ports are implemented across a physical interface between the host 200 and the network interface card 206. The physical interface may be one or more Peripheral Component Interface Express (PCIe) ports. The virtual switch 208 maps a virtual port or virtual network card 212 to a physical port or physical network.

An advantage of this architecture is that it leverages processing power associated with the network interface card 206, thereby alleviating the host 200 of various processing tasks. Another advantage of this architecture is that the one-to-one correspondence between a virtual machine and its virtual network port results in a pre-set distribution of computing resources. Consequently, if a virtual machine comes under attack, there is no spill-over processing impact on other virtual machines.

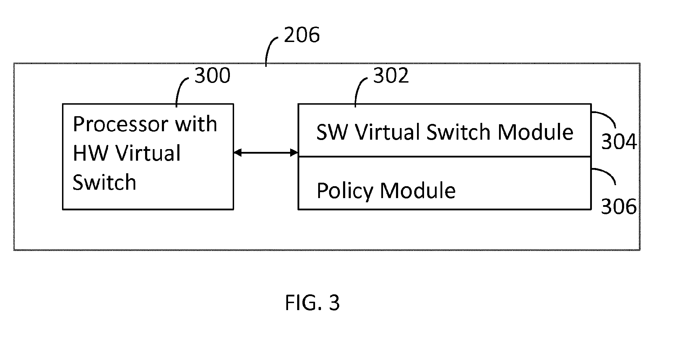

Figure 3 illustrates an embodiment of the network interface card 206. The virtual switch 208 may be implemented in hardware, software or a combination thereof. Figure 3 illustrates a processor 300 with hardware virtual switch processing capacity. The processor 300 accesses a memory 302 with a software virtual switch module 304. Thus, in this embodiment, the virtual switch is implemented as a combination of hardware and software. The memory 302 also stores a policy module 306. As discussed below, the virtual switch 208 may enforce various network traffic flow policies, such as bandwidth provisioning, quality of service, Transmission Control Protocol (TCP) offload, User Datagram Protocol (UDP) offload, Secure Socket Layer offload and other policies. This offloading of tasks from the host machine to the network interface card on a per virtual machine basis reduces the computation burden on the host machine.

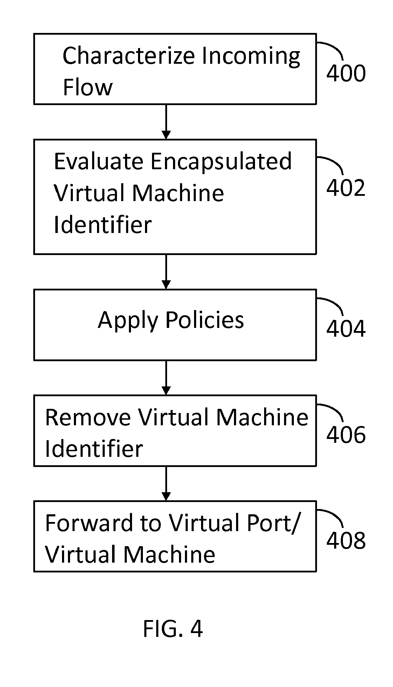

Figure 4 illustrates incoming network traffic processing. Initially, an incoming flow is characterized 400. Characterization may be based upon any number of factors, such as input port, Virtual Local Area network identification (VLAN ID), Ethernet source Media Access Control (MAC) address, Internet Protocol (IP) Source MAC address, IP Destination MAC address, Transmission Control Protocol (TCP) source or destination port, User Datagram Protocol (UDP) source or destination port and the like. In addition to these standard elements, the invention utilizes a virtual machine identifier. In particular, a Virtual Extensible LAN (VXLAN) identifier may be used. VXLAN is a network virtualization technology that uses an encapsulation technique to encapsulate MAC-based layer 2 Ethernet frames within layer 3 UDP packets. The encapsulated virtual machine identifier is evaluated 402. The identifier may also be something unique and specific to an experimental/custom protocol as defined by software defined networking. The identifier is used to route the flow to the appropriate virtual machine via its corresponding virtual network or virtual port. Each virtual network may have the same network address. The VXLAN identifier specifies the virtual network to which a packet belongs.

Prior to routing, the network interface card may apply one or more traffic flow policies 404, as discussed below. The virtual machine identifier is used as an index into a flow table array that has one or more policy entries to specify what to do with the packet. In one embodiment, the Linux® kernel is used for fast path processing. If an entry is not found in the flow table, then an exception is thrown and the Linux® user space is used for slow path processing.

Afterwards, the virtual machine identifier is removed 406 and the packet is forwarded to the appropriate virtual port or virtual network card for delivery to the virtual machine corresponding to that virtual port or virtual network card 408.

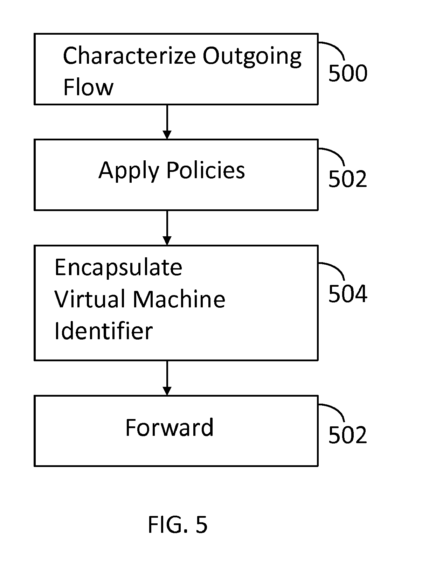

Figure 5 illustrates outgoing network traffic processing. Initially, outgoing network traffic is characterized 500. The criteria specified above for an incoming flow may be used for the outgoing flow. Policies are then applied 502. The virtual machine identifier is then encapsulated in the packet 504. Finally, the packet is forwarded 502. The packet may be forwarded to a physical port, for example port 210 of Figure 2. Alternately, the packet may be forwarded by the virtual switch 208 to another virtual port or virtual network card. Thus, effectively, virtual machine to virtual machine traffic is switched by the network interface card 206 without reaching the physical network.

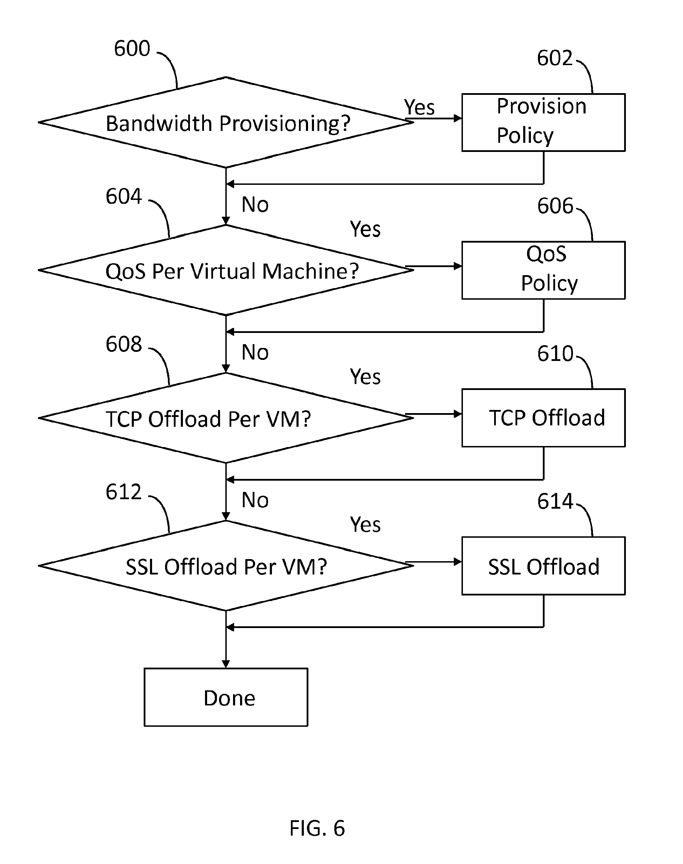

The policy module 306 includes executable instructions to enforce various traffic management policies. For example, as shown in Figure 6, the policy module may check for bandwidth provisions 600. If such provisions exist for a given user, flow application or device (600 - Yes), then the provision policy is enforced 602. For example, a specific user, flow, application or device may be limited to a specified amount of bandwidth at different times. The provision policy 602 may implement bandwidth provisioning for such a user, flow application or device.

The policy module 306 may also check for a Quality of Service (QoS) policy 604. The QoS policy may provide different priority to different users, flows, applications or devices. The QoS policy may guarantee a certain level of performance to a data flow. For example, a required bit rate, delay, jitter, packet dropping probability and/or bit error rate may be guaranteed. If such a policy exists (604 - Yes), then the policy is applied 606. The QoS dynamic execution engine in the commonly owned U.S. Patent Publication 2013/0097350 is incorporated herein by reference and may be used to implement QoS operations. The packet priority processor in commonly owned U.S. Patent Publication 2013/0100812 is incorporated herein by reference and may also be used to implement packet processing operations. The packet traffic control processor in commonly owned U.S. Patent Publication 2013/0107711 is incorporated herein by reference and may also be used to implement packet processing operations.

The policy module 306 may also check for a TCP offload policy 608. If such a policy exists (608 - Yes), then the offload policy is applied 610. The TCP offload policy may be applied with a TCP Offload engine (TOE). A TOE offloads processing of the entire TCP/IP stack to a network controller associated with the network interface card 206. The TCP offload is on a per virtual machine basis. Today, TCP offload is not virtualized. Instead a TOE on a network interface card assumes that one TCP stack is running because there is only one operating system running. In contrast, with the disclosed technology the network interface card has a number of virtual networks or virtual ports 212, which means that there is an equivalent number of TCP stacks running.

The policy module 306 may also check for a Secure Socket Layer (SSL) offload policy 612. If such a policy exists (612 - Yes), then the offload policy is applied 614. For example, the network interface card 206 may include hardware and/or software resources to encrypt and decrypt the SSL traffic. In this case, the network interface card 206 terminates the SSL connections and passes the processed traffic to the host 200. Thus, the host is freed from SSL processing.

Any number of host tasks may be offloaded to the network interface card 206. For example, Internet Protocol Security (Ipsec) processing may also be implemented on the network interface card 206. Similarly, a tunneling protocol where one network protocol is encapsulated inside another network protocol may be implemented on the network interface card 206. Network Virtualization using Generic Routing Encapsulation (NVGRE) and other protocols may also be implemented on the network interface card 206.

An embodiment of the present invention relates to a computer storage product with a non-transitory computer readable storage medium having computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media, optical media, magneto-optical media and hardware devices that are specially configured to store and execute program code, such as application-specific integrated circuits ("ASICs"), programmable logic devices ("PLDs") and ROM and RAM devices. Examples of computer code include machine code, such as produced by a compiler, and files containing higher-level code that are executed by a computer using an interpreter. For example, an embodiment of the invention may be implemented using JAVA®, C++, or other object-oriented programming language and development tools. Another embodiment of the invention may be implemented in hardwired circuitry in place of, or in combination with, machine-executable software instructions.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention.

## Claims

1. A system, comprising:
a host computer executing a plurality of virtual machines under the control of a hypervisor; and
a network interface card coupled to the host machine, the network interface card configured to implement a virtual switch with a plurality of virtual ports, wherein each virtual port of the plurality of virtual ports is associated with a virtual machine of the plurality of virtual machines.

2. The system of claim 1 wherein the virtual switch is configured to implement a traffic flow policy.

3. The system of claim 2 wherein the traffic flow policy implements bandwidth provisioning per virtual machine.

4. The system of claim 2 wherein the traffic flow policy is quality of service per virtual machine.

5. The system of claim 2 wherein the traffic flow policy implements a tunneling protocol wherein a first networking protocol is encapsulated into a second networking protocol.

6. The system of claim 2 wherein the traffic flow policy is Transmission Control Protocol offload processing per virtual machine.

7. The system of claim 2 wherein the traffic flow policy is Secure Socket Layer offload processing per virtual machine.

8. The system of claim 1 wherein the virtual switch is configured to evaluate an encapsulated virtual machine identifier in a received flow to select a virtual port corresponding to a specified virtual machine.

9. The system of claim 2 wherein the virtual switch is configured to evaluate a virtual machine identifier in a transmitted flow.

10. The system of claim 1 wherein the virtual switch is implemented in hardware.

11. The system of claim 1 wherein the virtual switch is implemented as software defined networking capable software.

12. The system of claim 1 wherein the virtual switch is implemented in a combination of hardware and software.
